# EUROPEAN PATENT APPLICATION

(11) **EP 3 480 434 A1**
(43) Date of publication of application: **08.05.2019**
(21) Application number: 18460060.9
(22) Date of filing: 05.10.2018
(51) Int. Cl.: F01D 17/14, F02B 37/22, F04D 27/02, F16K 3/03

(54) **INLET CARTRIDGE FOR ADJUSTING THE CROSS-SECTION OF COMPRESSOR INLET AND COMPRESSOR**

(30) Priority: 01.11.2017 PL 42333317
(71) Applicant: Szymanski, Piotr, 03-430 Warszawa (PL)
(72) Inventor: Szymanski, Piotr, 03-430 Warszawa (PL)

(57) **Abstract**

The cartridge for adjusting the cross-section of compressor inlet allows for an adjustment of the cross-section of the gas stream inlet directly in front of the compressor wheel 2 in radial, axial and radial-axial flow compressors. The cartridge for adjusting the cross-section of compressor inlet converts the rotational movement of the control plate 8 into a sliding movement of the blades 7, which enables adjustment of the gas stream inlet cross-section. With a reduced cross-section of the gas stream inlet, the operating range of the compressor allows the compressor to operate in a stable manner at lower flows. After increasing the cross-section of the gas stream inlet in front of the compressor's wheel 2, the operating range of the turbocharger is shifted towards higher flows, which allows for stable operation at higher gas flows. This solution makes it possible to increase the operating range of radial, axial and radial-axial compressors.

## Description

The subject of the invention is a cartridge for adjusting the cross-section of compressor inlet and a compressor for use in flow compressors, in particular in turbochargers in the automotive industry.

Radial, axial and radial-axial flow compressors are known. These compressors consist of rotors and rotor housings (stators). Compression and flow of the medium occur as a result of the rotation speed of the rotor, such compressors are used, among other applications, in aircraft turbine engines, gas turbines, power generators, turbochargers in internal combustion engines, electric compressors, industrial fans and many others.

These compressors, especially in turbochargers used to increase the efficiency of piston engines, have limited working conditions due to a physical phenomenon known as compressor stall. This effect occurs when working at choking points upon reaching the maximum compression pressure. This effect is accompanied by instability and strong vibrations of the gas stream that disturb the flow and cause decrease of compressor efficiency.

Solutions have been proposed to increase the operational range of compressors in turbochargers and move the compressor stall line towards smaller flows in patents US3391859 A, DE112013002453 T5, WO2014074448 A1, US6679057 B2, EP1994265A1, EP1992824A2.

A compressor containing a mechanism for adjusting the inlet, operating between a closed position and an open position, is known from the solution published in US2016177956 (A1).

The inlet cartridge for adjusting the cross-section of compressor inlet adapted to be fixed at the compressor inlet and containing a passage with a variable geometry opening defined by the position of at least two blades coupled with the rotating element, according to the invention, is distinguished by the fact that the rotating element is a control plate is provided with a groove, and at least one of the blades is provided with a pin located in the groove of the control plate and can move therein, whereas the blade is adjacent to a base plate provided with an opening that restricts its movement.

In a preferred embodiment, the edge of the control blade forming the inlet to the compressor extends along a circle segment, and preferably the edge is profiled.

The base plate preferably has a groove with an edge that determines the movement of the blade.

The base plate is preferably provided with at least one opening corresponding to the range of movement of the pin.

At least one pin is preferably provided with a plate at the end.

In a preferred embodiment, the pin has a square cross-section.

In another preferred embodiment, the pin has a circular cross-section.

The groove of the control plate is preferably connected with the opening.

In a preferred embodiment, the control plate is provided with a groove adapted to mate with a lever.

The compressor, provided with a housing and an inlet with an adjustable cross-section with a housing, according to the invention, is distinguished by the fact that the adjustment of the air outlet is achieved by means of a cartridge that is, according to the invention, attached to the compressor inlet housing.

The compressor is preferably provided with a positioning pin passing through the main plate, a groove in the control plate, the compressor housing and/or the compressor inlet housing.

The compressor is preferably provided with a keyway mating with the main plate.

A seal is preferably provided between the compressor housing and the compressor inlet housing.

The compressor is preferably provided with a lever with an axis mounted on the compressor housing, arranged in the groove of the control plate of the cartridge.

A solution for a significant increase of the operating range of flow compressors to "change the compressor map" with low cost of mass production is a cartridge for adjusting the cross-section of the compressor inlet. It allows for an adjustment of the cross-section of the gas stream inlet directly in front of the compressor wheel 2. The cartridge for adjusting the cross-section of compressor inlet converts the rotational movement of the control plate 8 into a sliding movement of the blades 7, which enables adjustment of the gas stream inlet cross-section. With a reduced cross-section of the gas stream inlet, the operating range of the compressor allows the compressor to operate in a stable manner at lower flows without the compressor stall phenomenon. After increasing the cross-section of the gas stream inlet in front of the compressor's wheel 2, the operating range of the turbocharger allows for stable operation at higher gas flows, that is, shifting the "compressor map" towards higher flows.

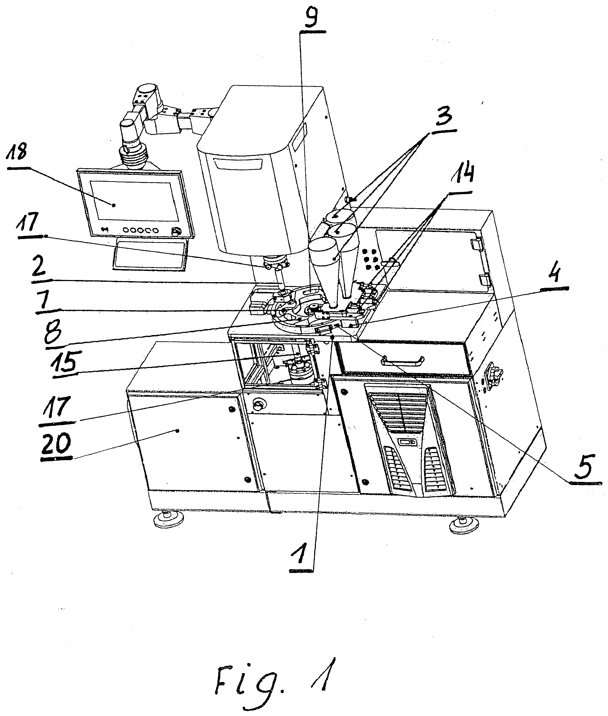

The subject of the invention is shown in the drawing, where Fig. 1 shows a schematic design of a radial compressor with a cartridge for adjusting the cross-section of compressor inlet with blades 7 in the closed position, i.e. in the position where the cross-section area of the gas stream inlet in front of the compressor wheel 2 is reduced.

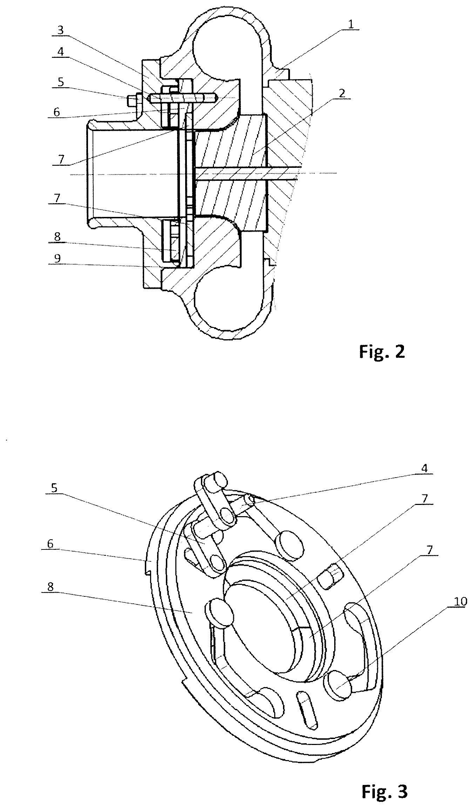

The subject of the invention is shown in the drawing, where Fig. 2 shows a schematic design of a radial compressor with a cartridge for adjusting the cross-section of compressor inlet with blades 7 in the open position, i.e. in the position where the cross-section area of the gas stream inlet in front of the compressor wheel 2 is increased.

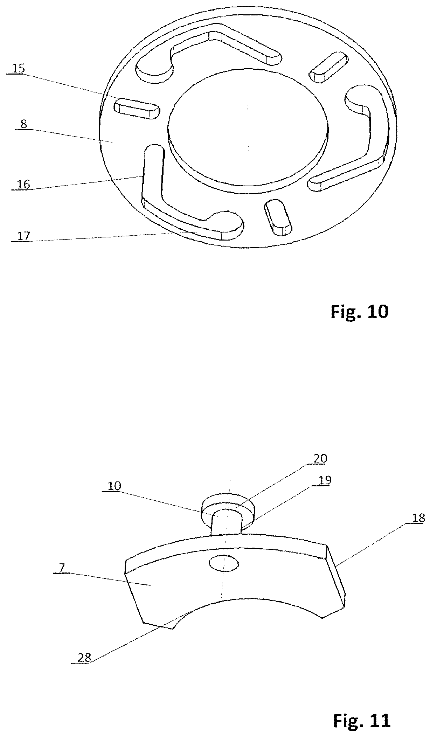

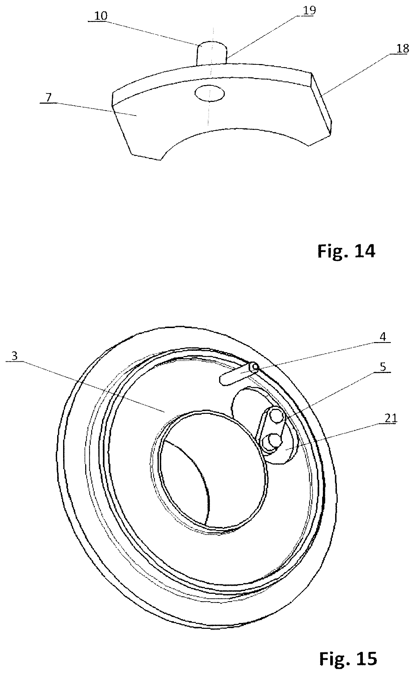

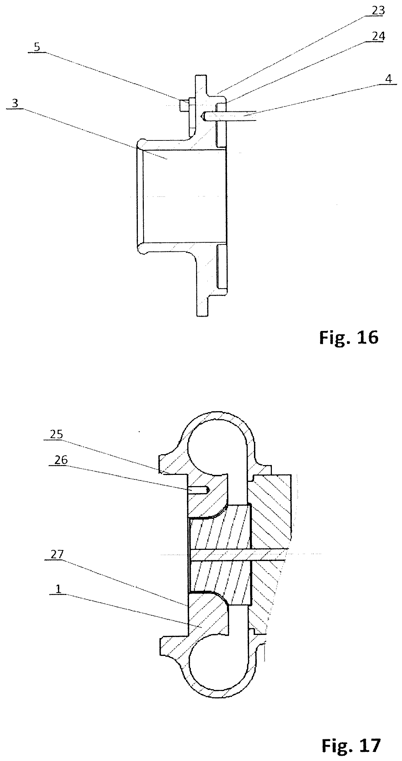

The cartridge for adjusting the cross-section of compressor inlet is located between the compressor housing 1 and the compressor inlet housing 3. The blades 7 for adjusting the cross-section of the compressor inlet are arranged directly in front of the compressor wheel 2 at a distance of between 0.05 mm and 100 mm. The position of the blades 7 is set by means of a lever 5, arranged in the compressor inlet housing 3, which rotates the control plate 8, which in turn causes sliding movement of the blades 7. The lever 5 can be moved by means of a pneumatic or electric actuator, either directly attached to the lever 5 or by means of other levers - with a different kinematics system. The cartridge for adjusting the cross-section of compressor inlet consists of a base plate 6, a control plate 8 and two or more blades 7. The blades 7 further comprise a pin 10. The pin 10 may be round, square or also have a different profiled shape. The pin 10 may end with a plate 20 with a larger cross-section area than the pin 10. This plate may have a square shape, a round shape or a different profiled shape. The pin 10 ending with the plate 20 is shown in the example in Fig. 11. The blade 7 with a pin 10 without an ending plate is shown in the example in Fig. 14.

The operating principle of the cartridge for adjusting the cross-section of compressor inlet is that the base plate 6 is fixedly installed between the housing of the compressor 1 and the casing of the compressor inlet 3. In the base plate 6, two or more blades 7 are arranged in grooves. The edges 18 of the blades 7 mate with the edges 11 of the base plate 6, defining the direction of movement of the blades 7 and guiding them. The openings 12 in the base plate 6 allow the blades 7 to move freely along the edge 11 and not block the movement of the pin 10 arranged in the blades 7. On the reverse side of the base plate 6 relative to the blades 7 is the control plate 8. The control board 8 contains openings 17 that allow the control plate 8 to be pass through the plate 20 and to assemble the entire cartridge for adjusting the cross-section of compressor inlet into an integral whole. There are grooves 16 in the control plate 8 which mate with the side surface 19 of the pins 10 arranged in the blades 7. By rotating the control plate 8, the grooves 16 exert pressure on the pins 10 of the blades 7 and force the blades 7 to move along the edge 11. The rotational movement of the control plate 8 is forced by the end of the lever 5 arranged in the groove 15. This is shown in the example in Fig. 3. The axis of the lever 5 is located in the compressor inlet housing 3, and the other end of the lever 5 connected with the actuator outside the compressor inlet housing 3.

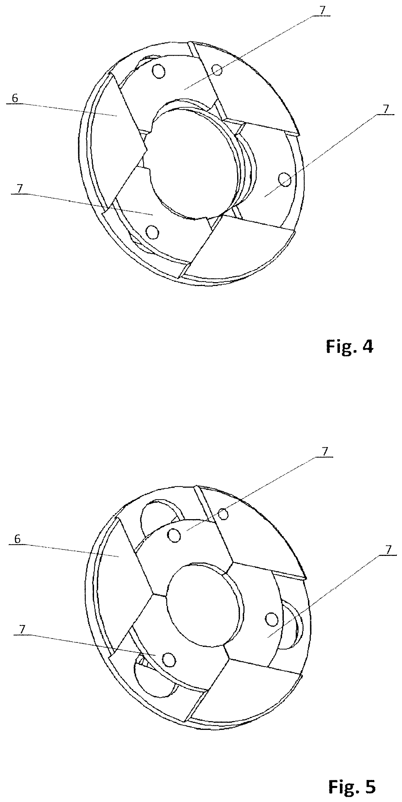

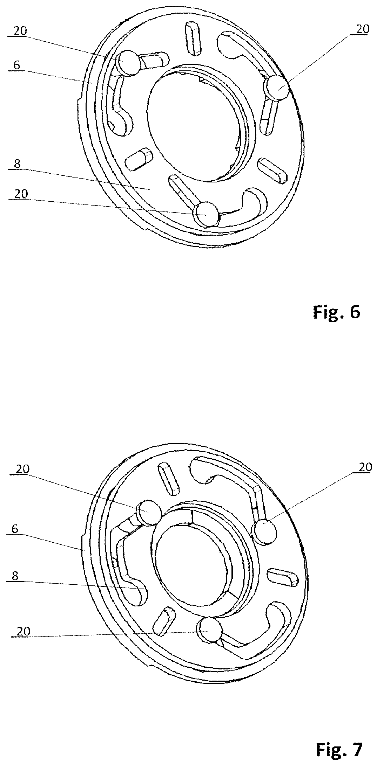

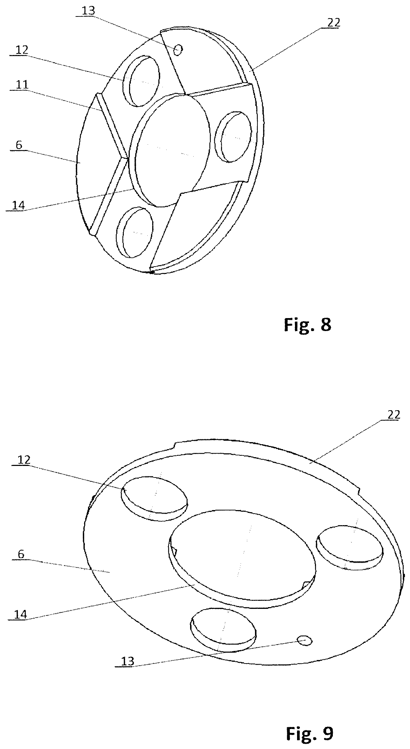

An example of an open cartridge for adjusting the cross-section of compressor inlet is shown in the example in Fig. 4 from one side and in Fig. 6 from the other side.

An example of a closed cartridge for adjusting the cross-section of compressor inlet is shown in the example in Fig. 5 from one side and in Fig. 7 from the other side.

The cartridge for adjusting the cross-section of compressor inlet can be designed in two ways. The first one is shown in the example in Fig. 1, Fig. 2, Fig. 3, Fig. 6 and Fig. 7. In this configuration, the pin 10 of the blade 7 ends with plates 20. This allows the cartridge for adjusting the cross-section of compressor inlet to be an integral whole due to the fact that the base plate 6 and the control plate 8 are located between the blades 7 and the plates 20. The blade 7 with the pin 10 and the plate 20 form an integral whole made of one piece of material or are permanently joined with one another.

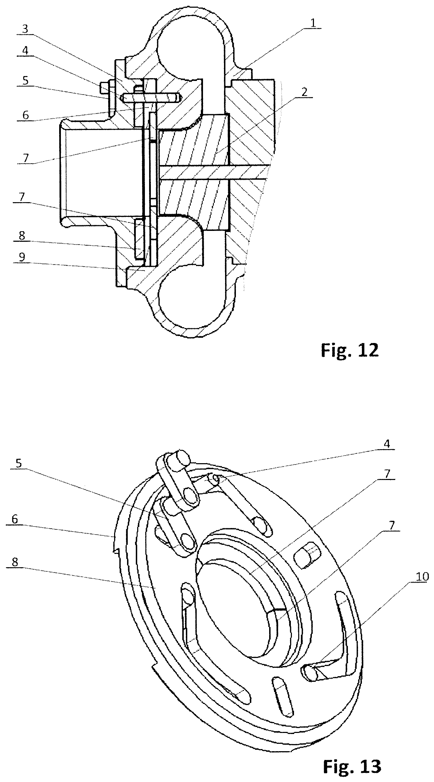

The second method of designing the cartridge for adjusting the cross-section of compressor inlet is shown in the example in Fig. 12 and Fig. 13. In this configuration, the pin 10 of the blade 7 does not end with plates 20. The blade 7 without the plate 20 is shown in the example in Fig. 14. Additionally, the control plate 8 does not need to have the groove 17, only the groove 16, as shown in the example in Fig. 13. It must be remembered about the part of the groove for the positioning pin 4, if no other method of angular positioning is used. For example, using a keyway. In this configuration, the cartridge must be installed between the housing of the compressor 1 and the housing of the compressor inlet 3 to form an integral whole.

In both variants of the cartridge for adjusting the cross-section of compressor inlet, after installation in the flow compressor, the main plate 6 should adhere with one surface from the side of the blades 7 to the surface 27 of the compressor housing 1. The main plate 6 should be pressed against the surface 27 of the compressor housing from the other side via the surface 24 of the compressor inlet housing 3. The radial positioning of the main plate 6 and the compressor inlet housing 3 should be on the internal diameter 25 of the compressor housing 1. The angular positioning can be provided by a positioning pin 4 arranged in the compressor housing 1, passing through the main plate 6 and the groove in the control plate 8, and ending in the compressor inlet housing 3. Positioning can also be achieved by using a keyway or other shape instead of the positioning pin 4. The sealing between the compressor housing 1 and the structure of the compressor inlet 3 is provided by means of the seal 9.

## Claims

1. The inlet cartridge for adjusting the cross-section of compressor inlet adapted to be fixed at the compressor inlet and containing a passage with a variable geometry opening defined by the position of at least two blades (7) coupled with the rotating element, **characterized in that**
the rotating element (8) is a control plate is provided with a groove (16), and at least one of the blades (7) is provided with a pin (10) located in the groove (16) of the control plate (8) and can move therein, whereas the blade (7) is adjacent to a base plate (6) provided with an opening (14) that restricts its movement.

2. The cartridge according to claim 1, **characterized in that** the edge (28) of the control blade (7) extends along a circle segment.

3. The cartridge according to claim 1, **characterized in that** the edge (28) is profiled.

4. The cartridge according to claim 1 or 2, **characterized in that** in the base plate (6) contains a groove with an edge (11) determining the blade movement (7).

5. The cartridge according to claim 1, 2 or 3 **characterized in that** the base plate (6) is provided with at least one opening (12) corresponding to the range of movement of the pin (10).

6. The cartridge according to claim 4, **characterized in that** at least one pin (10) is provided with a plate (20) at the end.

7. The cartridge according to any of the claims from 1 to 6, **characterized in that** the pin (10) has a square cross-section.

8. The cartridge according to any of the claims from 1 to 6, **characterized in that** the pin (10) has a circular cross-section.

9. The cartridge according to any of the claims from 1 to 8, **characterized in that** the groove (16) of the control plate (8) is connected to the opening (17).

10. The cartridge according to any of the claims from 1 to 9, **characterized in that** the control plate (8) is provided with a groove (15), adapted to mate with a lever.

11. The compressor provided with a housing (1) and an inlet with an adjustable cross-section with a housing (3), **characterized in that** the adjustment of the air outlet is achieved by means of a cartridge according to any of the claims from 1 to 10, attached to the compressor inlet housing (3).

12. The cartridge according to claim 11, **characterized in that** it is provided with a positioning pin (4) passing through the main plate (6), a groove in the control plate (8), the compressor housing (1) and/or the compressor inlet housing (3).

13. The cartridge according to claim 11, **characterized in that** it is provided with a keyway mating with the main plate (6).

14. The cartridge according to claim 11, 12 or 13, **characterized in that** there is a gasket (9) between the compressor housing (1) and the compressor inlet housing (3) .

15. The compressor according to any of the claims from 11 to 14, **characterized in that** it is provided with a lever (5) with an axis mounted on the compressor housing (1), arranged in the groove (15) of the control plate (8) of the cartridge.
